# EUROPEAN PATENT SPECIFICATION

(11) **EP 2 933 548 B1**
(45) Date of publication and mention of the grant of the patent: **15.08.2018**
(21) Application number: 13890513.8
(22) Date of filing: 30.09.2013
(51) Int. Cl.: F17D 1/20, F16L 55/04, F16L 55/045

(54) **METHOD FOR DAMPING PRESSURE PULSES IN A PRODUCT PIPELINE**
VERFAHREN ZUM DÄMPFEN VON DRUCKIMPULSEN IN EINER PRODUKTPIPELINE
PROCÉDÉ D'ANNULATION DES IMPULSIONS DE PRESSION DANS UN CONDUIT DE PRODUITS

(30) Priority: 31.07.2013 RU 2013135696
(43) Date of publication of application: 21.10.2015
(73) Proprietor: Obschestvo s ogranichennoi otvetstvennostju "TekhPromArma" (OOO "TekhPromArma"), Moscow 109377 (RU)
(72) Inventor: PESTUNOV, Vitaly Alfredovich, Moscow 117392 (RU)
(74) Representative: Lapienis, Juozas
(86) International application number: PCT/RU2013/000858
(87) International publication number: WO 2015/016738

(56) References cited:
- WO-A1-2012/099492
- DE-A1-102004 045 100
- RU-C1- 2 386 889
- RU-C1- 2 386 889
- SU-A1- 903 652
- SU-A1- 1 710 924
- US-A- 4 750 523
- US-A1- 2010 288 388

## Description

### Field of the Invention

The invention relates to the field of physics, namely, to systems for liquid and gas pressure control and adjustment, in particular, to stabilizing devices operating under overloads, including hydraulic shocks.

### Related Art

Short circuits and power supply failures, switching errors, maintenance error and similar phenomena can lead to accidents associated with pipeline depressurization, equipment and fitting failure.

According to the operating experience, 60% of pipeline bursts are caused by hydraulic shocks, pressure drops and vibration, about 25% are caused by corrosion processes, 15% are associated with natural phenomena and force majeure. According to Russian and foreign experts, the most severe bursts of piping systems having the most grave aftermath are caused by hydraulic shocks.

Economic losses associated with the accident aftermath in a modern city are made up of the direct costs for replacement of damaged pipeline section and restoration of infrastructure (at average from 1 to 10million Roubles), the losses of medium transported (up to 30% in real terms), the indirect losses (preparation, cleaning and water delivery), as well as the costs for dealing with the environmental and social impacts.

The state of the art discloses a method for self-damping the overpressure pulses of medium transported in a main pipeline, consisting in providing a section of said main pipeline with a pressure pulse stabilizer located streamwise the medium transported from a supplier to a consumer, then withdrawing the pulse stream into the stabilizer as a first part, followed by a second part of the stream which is sent to an auxiliary input of the stabilizer after a delay, wherein potential pressure pulse sources are pre-detected on the protected pipeline section, wherein the stabilizers are oriented according to a point indicator outer surface toward the potential point source of pressure pulses with arrows one way directed streamwise the medium transported through stages, wherein the main pipeline pressure perturbing pulse energy is damped by means of damping and the phase shift of the wave and vibration oscillations and resonance processes within the transported medium through providing the stabilizer with a hollow cylindrical body having covers at its ends, and a divider and a separation case concentrically fixed to provide an inner cavity therebetween divided into two unequal parts: the smaller direct flow chamber arranged at the stabilizer input, into which the first part of the transported medium flow is fed through radial holes, and the larger swirl chamber where a specified delay is performed by withdrawing the second part of the flow through said additional input in the form of inclined holes; and to form a compensation chamber between the case and the body, wherein the direct flow chamber volume is set not less than 1/3 of the swirl chamber total volume and the diameter of the radial holes is 1.2-4 of the diameter of the inclined holes at equal total flow rates of the working medium passing through the radial and inclined holes, wherein angles of all the inclined holes are set as follows: α is set relative to the radial axis of the cross section, and β is set relative to the longitudinal axis in the range of 0-45°.

Document RU 2 386 889 C1 discloses a stabiliser, which serves to damp fluid and gas pressure pulsations in pipelines, consisting of pipeline with perforated holes, and distributing expansion pre-chamber with extension damping chambers, which have a cylindrical shape and are arranged around said pre-chamber to have their axes parallel, wherein every extension damping chamber is furnished with face baffles with perforated holes for three chambers, wherein lateral chambers of damping chambers are furnished with branch pipes.

Document DE 10 2004 045100 A1 discloses a damping device comprising a hydraulic line filled with fluid, a master cylinder connected to a clutch pedal and a slave cylinder connected to a disengaging unit of a clutch, and a single piece housing provided with a working chamber, which receives a piston positionable in the working chamber using spring units, wherein the piston axially support itself at a cover wall and a base wall. The closest prior art to the claimed invention is document WO 2012099492 A1, which discloses a pressure stabilizer comprising a hollow, cylindrical housing having an end plate at each end and encircling a central perforated pipe that is disposed therein and a perforated shell that is coaxial with the central pipe and forms an expansion chamber in conjunction therewith and a damping chamber in conjunction with the housing, wherein the expansion chamber of the stabilizer is divided into two unequal parts by a hermetic radial partition, and the perforations in the central pipe and the shell, corresponding to the high-volume expansion chamber, are arranged at specific angles to the longitudinal axis of the pipe and the radial axis of the cross section of the shell; the damping chamber is divided by two partitions into a left chamber, a right chamber and a central chamber.

The prior art drawbacks include manufacturing, assembly and repair technology complexity and pulse damping technology low efficiency.

### Summary of the Invention

The invention as claimed differs from the prior art in that a mounting location of the stabilizer is determined based on a distance within 10 m maximum from a potential point source of pressure pulses, and based on a distance within 100-1000 meters in case when at least two stabilizers are mounted at a stage for preventive purposes, and in that the divider is removable. The technical effect of the use of the invention as claimed lies in simplifying the manufacturing and assembly technologies and improving operation ease and pulsation damping efficiency.

General and specific essential features that characterize causal relationship between the invention and the technical effect are stated below.

Main pipeline pressure perturbing pulse energy is damped by means of the phase shift and damping the wave and vibration oscillations and resonance processes within the transported medium through providing a stabilizer with a hollow cylindrical body having covers on its ends and a removable divider and a separation case concentrically fixed to provide an inner cavity therebetween divided into two unequal parts: the smaller direct flow chamber arranged at the stabilizer input, into which the first part of the transported medium flow is fed through radial holes, and the larger swirl chamber where the specified delay is performed by withdrawing the second part of the flow through said additional input in the form of inclined holes; and to form a compensation chamber between the case and the body, wherein the chamber is divided by a damping unit having a spring-loaded piston into a pressure chamber connected via the radial holes to the direct flow chamber, and a balance chamber connected via inclined holes to the swirl chamber.

The direct flow chamber volume is set not less than 1/3 of the swirl chamber total volume and the diameter of the radial holes are 1.2-4 of the diameter of the inclined holes at equal total flow rates of working medium passing through the radial and inclined holes.

Angles of all inclined holes are set as follows: α is set relative to the radial axis of the cross section, and β is set relative to the longitudinal axis in the range of 0-45°, and then the pressure in the pressure chamber and the balance chamber is adjusted to the pipeline pressure through moving the pistons of the damping unit by means of the springs into the initial position, thus, enabling free flow of the transported medium through the stabilizer.

Said pulse pressure damping is carried out using a damping unit provided in the form of a circular cage having axial holes receiving said pistons spring-loaded on both sides, wherein the circular cage is divided by a plane, transverse to its axis, into two parts of unequal thickness, wherein the smaller one is faced to the direct flow chamber and permanently attached to the divider, and the larger one is coupled to a tab on the latter.

Said pressure pulse damping is carried out by the damping unit provided in the form of a circular cage having axial holes, wherein the circular cage is divided by a plane transverse to its axis into two parts of unequal thickness, wherein the smaller one is faced to the direct flow chamber and permanently attached to the divider, and the larger one is coupled to a tab on the latter, wherein the body is provided dismountable with respect to a spacer permanently connected to the output, input and internal flanges, wherein a gauge is provided at the output intermediate flange, and the cylindrical walls of the flow divider and the separation case are provided with thickenings having said inclined openings evenly distributed all over them.

### BRIEF DESCRIPTION OF THE DRAWINGS

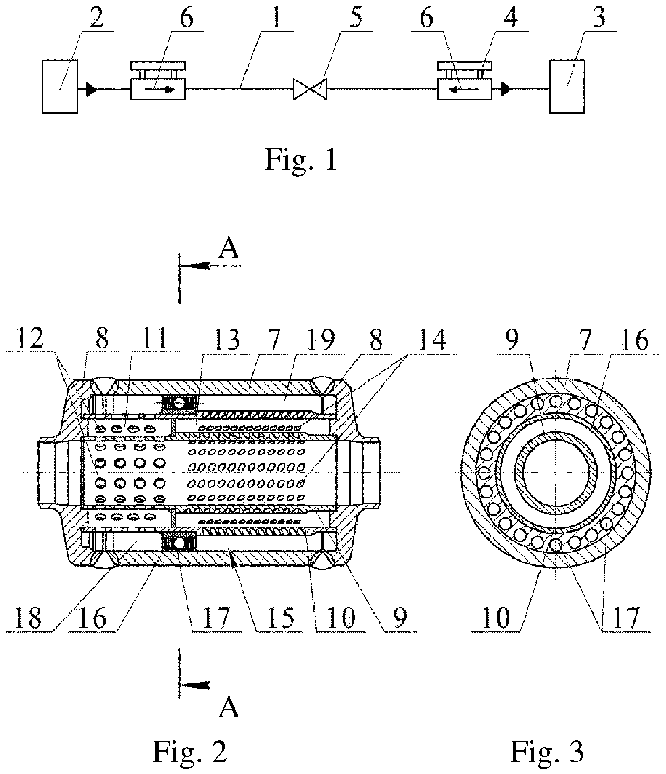

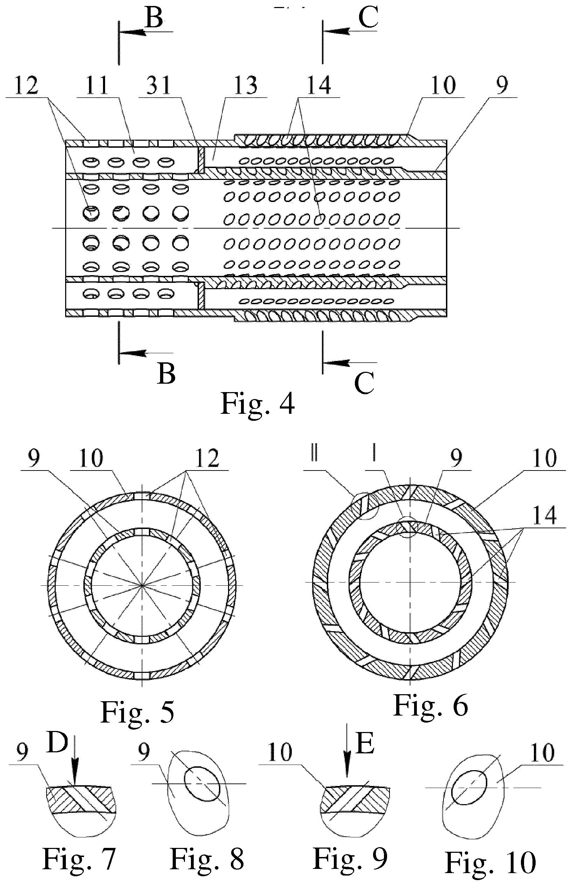

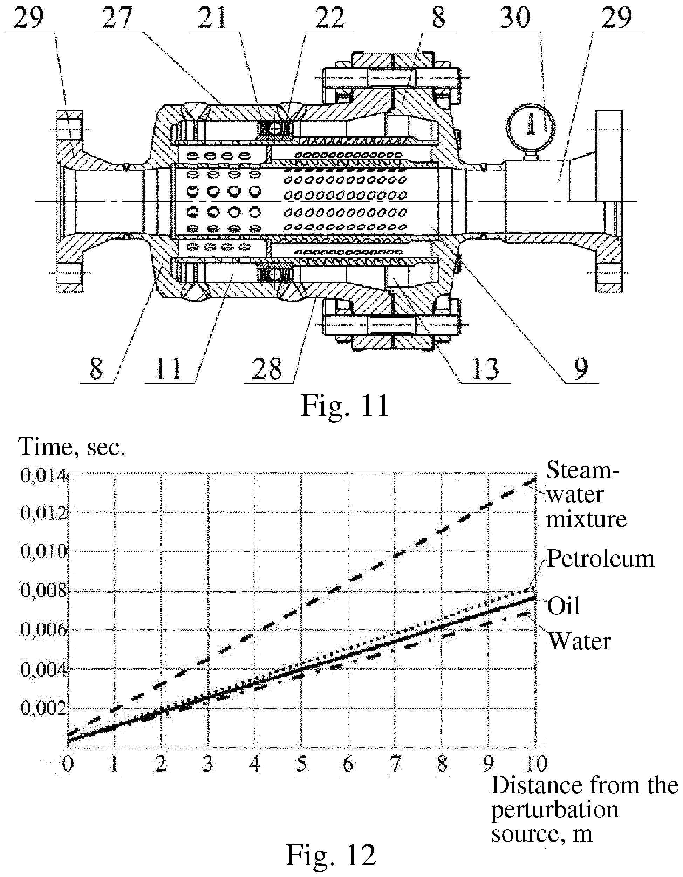

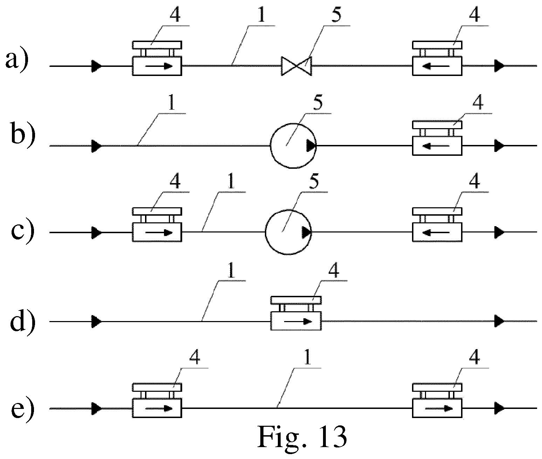

The summary of the invention is attended with drawings as follows: Fig.1 is an installation diagram for stabilizers; Fig. 2 is a longitudinal cross section view of a stabilizer; Fig. 3 is a view taken along A-A of Fig. 2; Fig. 4 is a longitudinal cross section view of a divider with a separation case; Fig. 5 is a view taken along B-B of Fig. 4; Fig. 6 is a view taken along C-C of Fig. 4; Fig. 7 is a view I of Fig. 6; Fig. 8 is a view D of Fig. 7; Fig. 9 is a view II of Fig. 6; Fig. 10 is a view E of Fig. 9; Fig. 11 shows a dismountable stabilizer; Fig. 12 is a triggering time diagram of a stabilizer when transporting different products; Fig. 13 shows installation diagrams a) - e) for stabilizers.

### DETAILED DESCRIPTION OF THE EMBODIMENTS

A method for self-damping overpressure pulses of medium transported in a main pipeline, consisting in providing a section of said main pipeline 1 with at least one pressure pulse stabilizer 4 located streamwise the medium transported from a supplier 2 to a consumer 3.

Then the pulse stream is withdrawn into the stabilizer 4 as a first part, followed by a second part of the stream which is sent to an auxiliary input of the stabilizer 4 after a delay.

Potential pressure pulse sources 5 are pre-detected on the protected pipeline section 1, then, a mounting location of the stabilizer 4 is determined based on the distance within 10m maximum from a potential point source 5 of pressure pulses, and based on the distance within 100-1000 meters in case when at least two prevention stabilizers 4 per a stage (Fig. 13e).

Stabilizers 4 are oriented according to point indicator 6 on its outer surface toward the potential point source 5 of pressure pulses with arrows one way directed streamwise the medium transported through stages (Fig. 13e).

Main pipeline 1 pressure perturbing pulse energy is damped by means of the phase shift and damping the wave and vibration oscillations and resonance processes within the transported medium through providing the stabilizer 4 with a hollow cylindrical body 7 having covers 8 at its ends, and a removable divider 9 and a separation case 10 concentrically fixed to provide an inner cavity therbetween divided with a partition wall 31 into two unequal parts: the smaller direct flow chamber 11 arranged at the stabilizer 4 input, into which the first part of the transported medium flow is fed through radial holes 12, and the larger swirl chamber 13 where the specified delay is performed by withdrawing the second part of the flow through said additional input in the form of inclined holes 14; and to form a compensation chamber 15 between the case 10 and the body 7, wherein the chamber is divided by a damping unit 16 having a spring-loaded piston 17 into a pressure chamber 18 connected via the radial holes 12 to the direct flow chamber 11 and a balance chamber 19 connected via the inclined holes 14 to the swirl chamber 13.

Meanwhile, the direct flow chamber 12 volume is set not less than 1/3 of the swirl chamber 14 total volume, and the diameter of the radial hole 12 is 1,2-4 of diameter of the inclined holes 14 diameter at equal total flow rates of the working medium passing through the radial 12 and inclined holes 14.

Wherein, angles of all inclined holes are set as follows: α is set relative to the radial axis of the cross section, and β is set relative to the longitudinal axis in the range of 0-45°.

Then the pressure in the pressure chamber 18 and the balance chamber 19 is adjusted to the pipeline 1 pressure through moving the pistons 17 of the damping unit 16 by means of the springs 20 into the initial position, thus, enabling free flow of the transported medium through the stabilizer 4.

Said pulse pressure damping is carried out using the damping unit 16 provided in the form of a circular cage with axial holes receiving said pistons 17 spring-loaded on both sides.

Wherein, the circular cage is divided by a plane transverse to its axis into two parts of unequal thickness, wherein the smaller one 21 is faced to the direct flow chamber 12 and permanently attached to the divider 9, and the larger one 22 is coupled to a tab on the latter.

Said pressure pulse damping can be carried out by a stabilizer 4, wherein the body 7 is provided dismountable with respect to a spacer 27 permanently connected to an output, input 8 and internal 28 flange, wherein the latter is connected to an intermediate flange 29 through a gauge 30.

### Industrial Applicability

This technical solution is industrially applicable, as its object is indicated in the description of the application and in the title of the invention, and it can be industrially manufactured and used for overload protection of pipelines for various purposes.

A dismountable unit for self-damping the working medium hydraulic shock pulses in main pipelines operates as follows.

This solution is designed by TehPromArma ltd. - a Russian company that has developed and commercialized a series of fundamentally new technical means for damping hydraulic shocks and vibrations in pipelines for any purpose.

The device as claimed can be used in process piping of nuclear power plants (NPP) in the normal operation systems and the security systems with PWR, LWGR and fast neutron reactors in pipelines with a diameter of 10 to 1500 mm and a working pressure of 0.01 to 250 bar (25 MPa).

The device as claimed can be applied for reducing dynamic loads caused by pressure pulses and hydraulic shocks, the piping and the associated equipment are exposed to, and as a result, for reducing noise and vibration occurring in the course of the medium flow movement.

The stabilizers 4, depending on the pipeline 1 equipment configuration, are mounted according the following diagrams of Fig. 13:
a) the stabilizers 4 are mounted in close proximity to, but not beyond 10meters, to the valves, pumps and other sources creating a disturbance, including high-speed (cut-off) valves, regulating valves, return valves and valves with any type of control in order to orient an arrow 6 on the body 7 pointing in the direction of the valve;
b) the stabilizers 4 are mounted downstream the pumps, so that the arrow 6 on the stabilizer 4 body 7 is oriented pointing in the direction of the pump;
c) for those systems where the pumps perform the function of the devices increasing the pressure in the pipeline 1, the stabilizers 4 are mounted upstream and downstream the pumps (the arrows 6 on the stabilizer 4 body 7 pointing in the direction of the pump);
d) the stabilizers 4 are mounted in areas of possible two-phase mode occurrence (steam-water mixtures);
e) the stabilizers 4 are mounted on straight sections of the pipeline 1 one after another, at a distance from 300 to 1000 meters.

A dismountable unit for self-damping the working medium hydraulic shock pulses in main pipelines operates according to a self-stabilizing principle, wherein damping is performed through damping the perturbing pulse energy of the very impulses, that is an impulse itself is applied as an elastic (damping) element.

The device operation is based on the dissipative and elastic-damping effect on the pumping medium flow, distributed along the pipeline length.

Under a steady-state mode of the operating medium flow (e.g., liquid) passing through a pipeline, the pressure at the inlet and outlet of the device is the same, whereas constant pressure is set in all the chambers 11, 13, 18, 19.

The damping unit 16 pistons 17 take a neutral position under the action of the springs 20.

Once pulse pressure occurred at the pipeline input it reaches the balance chamber 19 through the radial holes 12 in the direct flow chamber 11 almost instantly and with little energy loss.

Another part of the pulse passes through the inclined holes 14 into the swirl chamber 13, thus, the transported medium flow is swirled, its amplitude being reduced due to the increase of its turbulence.

Since the openings 14 in the divider 9 and the separation case 10 have opposite tilt angles, the flow unwinds providing further operating medium energy dissipation and, therefore, the amplitude of the pressure pulse decreases, thus, increasing the time for its receipt.

Due to the pressure difference and the phase shift in the pressure chamber 18 and the balance chamber 19, the pulse amplitudes are subtracted, the transient pulse fall is smoothed, and the device is reset.

This sequential interaction between the liquid and the spring damping elements allows for an effective overpressure oscillations (hydraulic shock) damping due to the suppleness of the damping elements in the dynamic mode, and due to the dissipation of oscillation energy at the allotted perforation holes, thus leading to the energy loss and creating conditions for preventing further spread of the waves and compensating pressure drops.

The use of the device provides:
- damping and phase shift of the wave and vibration processes to an acceptable level, both in the emergency and in the normal operation mode;
- an increase of the pipe corrosion fatigue life that extends the pipe operation life in 1.5-2 times even for excessively worn pipelines;
- reduction in total accident rate for piping and equipment by 70-80%;
- exclusion of economic losses associated with the accident aftermath caused by hydraulic shocks, vibration and pressure pulsation;
- reduction in operating costs and enabling replacement of the excessively worn pipelines and equipment in hydraulic systems in the course of the preventative mode, which is much cheaper than emergency replacement of damaged pipe sections.

The pressure stabilizers are equally efficient both in the emergency and in the normal operation mode of a hydraulic system when transporting different products (Fig. 12).

Compared with the technical means of a similar purpose the invention has the following advantages:
- the time needed for reducing the hydraulic shock and pressure pulsation amplitudes in pipelines to a safe level is less than 0.004 seconds;
- the ratio of reduction to a safe level is not less than 10 times;
- the type of connection to a pipeline is welding or mating flanges;
- no need for regulatory control mechanisms, no loss of operating medium.

The use of the invention allows for simplifying the manufacturing and assembly technologies and improving operation ease and damping pulsations efficiency.

## Claims

1. A method for self-damping overpressure pulses of medium transported in a main pipeline (1), consisting in providing a section of said main pipeline (1) with at least one pressure pulse stabilizer (4) located streamwise the medium transported from a supplier (2) to a consumer (3), withdrawing the pulse stream into the stabilizer (4) as a first part, followed by a second part of the stream which is sent to an auxiliary input of the stabilizer (4) after a delay, wherein potential pressure pulse sources (5) are pre-detected on the protected pipeline (1) section, wherein the stabilizers (4) are oriented according to a point indicator (6) outer surface toward the potential point source (5) of pressure pulses with arrows one way directed streamwise the medium transported through stages, wherein the main pipeline (1) pressure perturbing pulse energy is damped by means of damping and the phase shift of the wave and vibration oscillations and resonance processes within the transported medium through providing the stabilizer (4) with a hollow cylindrical body (7) having covers (8) at its ends, and a divider (9) and a separation case (10) concentrically fixed to provide an inner cavity therebetween divided into two unequal parts: the smaller direct flow chamber (11) arranged at the stabilizer (4) input, into which the first part of the transported medium flow is fed through radial holes (12), and the larger swirl chamber (13) where a specified delay is performed by withdrawing the second part of the flow through said auxiliary input in the form of inclined holes (14); and to form a compensation chamber (15) between the case (10) and the body (7), wherein the direct flow chamber (11) volume is set not less than 1/3 of the swirl chamber (13) total volume and the diameter of the radial holes (12) is 1.2-4 of the diameter of the inclined holes (14) at equal total flow rates of the working medium passing through the radial and inclined holes (14), wherein angles of all the inclined holes (14) are set as follows: α is set relative to the radial axis of the cross section, and β is set relative to the longitudinal axis in the range of 0-45°, wherein the divider (9) is removable, and the compensation chamber (15) is divided by a damping unit (16) having a spring-loaded piston (17) into a pressure chamber (18) connected via radial holes (12) to the direct flow chamber (11) and a balance chamber (19) connected via inclined holes (14) to the swirl chamber (13), and then the pressure in the pressure chamber (18) and the balance chamber (19) is adjusted to the pipeline (1) pressure through moving the pistons (17) of the damping unit (16) by means of the springs into the initial position, thus enabling free flow of the transported medium through the stabilizer (4), **characterized in that** a mounting location of the stabilizer (4) is determined based on a distance within 10 meters maximum from a potential point source (5) of pressure pulses, and in case when at least two stabilizers (4) are mounted for preventive purposes, having them mounted one after another at a distance from 100 to 1000 meters.

2. The method for self-damping overpressure pulses of claim 1, ***characterized in that*** said pulse pressure damping is carried out by the damping unit (16), provided in the form of a circular cage having axial holes receiving said pistons (17) spring-loaded on both sides, wherein the circular cage is divided by a plane transverse to its axis into two parts of unequal thickness, wherein the smaller one (21) is faced to the direct flow chamber (11) and permanently attached to the divider (9), and the larger one (22) is coupled to a tab on the latter.

3. The method for self-damping overpressure pulses of claim 1, ***characterized in that*** said pressure pulse damping can be carried out by the stabilizer (4), wherein the body (7) is provided dismountable with respect to a spacer (27), permanently connected to the output, input and internal flanges (28), wherein the latter is connected to an intermediate flange (29) through a gauge (30).

## Patentansprüche

1. Verfahren zur Eigendämpfung von Überdruckimpulsen des transportierten Mediums in der Hauptleitung (1), das darin besteht, mindestens ein Stabilisator (4) von Druckimpulsen in der Richtung der Bewegung des transportierten Mediums vom Lieferanten (2) zum Verbraucher (3) an einem Abschnitt der Hauptleitung (1) vorgesehen wird, der Impulsstrom als erster Teil und dann als zweiter Teil des Stroms, der nach der Verzögerung zum zusätzlichen Eingang des Stabilisators (4) gesendet wird, zum Stabilisator umgeleitet wird, wobei mögliche Quellen (5) von Druckimpulsen auf dem geschützten Abschnitt der Hauptleitung (1) im Voraus erkannt werden, wobei die Stabilisatoren (4) nach einer Außenfläche des Punktindikators (6) zur Potentialpunktquelle (5) von Druckimpulsen mit den Pfeilen ein Weg in Richtung der Strömung des transportierten Mediums durch Streckenabschnitte orientiert sind, wobei die Energie des störenden Druckimpulses in der Hauptleitung verzehrt ist, durch Dämpfung und Phasenverschiebung von Wellen- und Vibrationsschwingungen und Resonanzprozessen in dem transportierten Medium, durch Ausführen des Stabilisators (4) mit einem hohlen zylindrischen Körper (7) mit Abdeckungen (8) an seinen Enden, und einer Trennwand (9) und einem Trenngehäuse (10) konzentrisch befestigten einen inneren Hohlraum dazwischen, in zwei ungleiche Teile aufgeteilt zu bilden: die Gleichstromkammer (11) von kleineren Größe, am Eingang des Stabilisators (4) angeordnet, wohin der erste Teil des transportierten Mediums über radiale Öffnungen (12) zugeführt wird, und die größere Wirbelkammer (13), in denen die spezifizierte Verzögerung durch Umleitung des zweiten Teil des Stromes durch den zusätzlichen Eingang in Form von geneigten Öffnungen (14) durchgeführt wird; und eine Ausgleichskammer (15) zwischen dem Gehäuse (10) und dem Körper (7) zu bilden; wobei das Volumen der Gleichstromkammer (11) auf nicht weniger als 1/3 des Gesamtvolumens der Wirbelkammer (13) eingestellt ist, und der Durchmesser der radialen Öffnungen (12) beträgt 1,2-4 des Durchmessers der geneigten Öffnungen (14) bei gleichen Gesamtströmen des Arbeitsmediums, das durch die radialen und geneigten Öffnungen (14) geht, wobei die Winkel aller geneigten Öffnungen (14) wie folgt eingestellt werden: α relativ zur Radialachse des Querschnitts festgelegt ist, und β relativ zur Längsachse im Bereich von 0-45° festgelegt ist, wobei die Trennwand (9) abnehmbar ist, und die Ausgleichskammer (15) durch eine Dämpfungseinheit (16) mit einem federbelasteten Kolben (17) in eine Druckkammer (18), die über radiale Öffnungen (12) mit der Gleichstromkammer (11) verbunden ist, und eine Ausgleichskammer (19), die über geneigte Öffnungen (14) mit der Wirbelkammer (13) verbunden ist, aufgeteilt wird, und dann der Druck in der Druckkammer (18) und der Ausgleichskammer (19) durch Bewegung der Kolben (17) der Dämpfungseinheit (16) mittels der Federn in die Ausgangsstellung auf den Druck der Leitung (1) eingestellt wird, somit freien Fluss des transportierten Mediums durch den Stabilisator (4) ermöglicht, **dadurch gekennzeichnet, dass** ein Montageort des Stabilisators (4) basierend auf einer Entfernung von maximal 10 Metern von einer potentiellen Punktquelle (5) von Druckimpulsen bestimmt wird, und in dem Fall, wenn mindestens zwei Stabilisatoren (4) zum Zwecke der Prävention montiert sind, sie nacheinander in einer Entfernung von 100 bis 1000 Metern montiert werden.

2. Verfahren zur Eigendämpfung von Überdruckimpulsen nach Anspruch 1, ***dadurch gekennzeichnet, dass*** die genannte Pulsdruckdämpfung durch die Dämpfungseinheit (16), die in Form eines kreisförmigen Käfigs mit axiale empfangende den genannten federbelasteten auf beiden Seiten Kolben (17) Öffnungen, ausgeführt wird, wobei der kreisförmige Käfig durch eine Ebene quer zu seiner Achse in zwei Teile ungleicher Dicke unterteilt ist, wobei der kleinere Teil (21) der Gleichstromkammer (11) zugewandt wird und dauerhaft an der Trennwand (9) befestigt wird, und der größere Teil (22) mit einer Zunge an letzterer gekoppelt wird.

3. Verfahren zur Eigendämpfung von Überdruckimpulsen nach Anspruch 1, **dadurch gekennzeichnet, dass** die genannte Druckimpulsdämpfung durch den Stabilisator (4) ausgeführt werden kann, wobei der Körper (7) abnehmbar in Bezug auf einen Abstandhalter (27), die fest mit den Auslauf-, Eingangs- und Innenflanschen (28) verbunden ist, vorgesehen wird, wobei Letzterer mit einem Zwischenflansch (29) durch ein Messgerät (30) verbunden wird.

## Revendications

1. Un procédé d'auto-amortissement d'impulsions de surpression d'un fluide transporté dans un pipeline (1) principale, consistant à prévoir une section dudit pipeline principale (1) avec au moins un stabilisateur (4) d'impulsion de pression situé dans le sens de transport du fluide transporté d'un fournisseur (2) à un consommateur (3), à retirer le flux d'impulsions dans le stabilisateur (4) en première partie, suivie d'une seconde partie du flux qui est envoyée à une entrée auxiliaire du stabilisateur (4) après un délai, dans lequel les sources (5) potentielles d'impulsions de pression sont prédétectées sur la section de pipeline (1) principale protégée, dans lequel les stabilisateurs (4) sont orientés selon une surface extérieure du pointeur (6) fléché vers la source (5) potentielle d'impulsions de pression avec des flèches unidirectionnelles dirigées dans le sens de transport du fluide transporté à travers les étapes,
dans lequel l'énergie d'impulsion perturbant la pression du pipeline (1) principale est atténuée au moyen d'amortissement et le déphasage de oscillation d'onde et de vibration et des processus de résonance dans le fluide transporté en fournissant le stabilisateur (4) avec un corps cylindrique creux (7) ayant des couvercles (8) à ses extrémités, et un diviseur (9) et un boîtier de séparation (10) concentriquement fixé pour fournir entre eux une cavité interne divisée en deux parties inégales: la plus petite chambre (11) d'écoulement direct disposée à l'entrée du stabilisateur (4), dans laquelle la première partie du flux de fluide transporté est alimentée à travers des trous (12) radiaux, et la plus grande chambre (13) de tourbillonnement où un délai spécifié est effectué en retirant la seconde partie de l'écoulement à travers ladite entrée auxiliaire sous la forme de trous (14) inclinés; et pour former une chambre (15) de compensation entre le boîtier (10) et le corps (7), dans lequel le volume de la chambre (11) d'écoulement direct est réglé à au moins 1/3 du volume total de la chambre (13) de tourbillonnement et le diamètre des trous (12) radiaux est 1,2-4 du diamètre des trous (14) inclinés à des débits totaux égaux du fluide fonctionnel traversant les trous (14) radiaux et inclinés, dans lequel les angles de tous les trous (14) inclinés sont réglés comme suit: *a* est réglé par rapport à l'axe radial de la section transversale, et β est réglé par rapport à l'axe longitudinal dans la plage de 0-45°, dans lequel le diviseur (9) est amovible, et la chambre (15) de compensation est divisée par une unité (16) d'amortissement ayant un piston (17) à ressort en une chambre (18) de pression connecté par des trous (12) radiaux à la chambre (11) d'écoulement direct et une chambre (19) de balance reliée par des trous (14) inclinés à la chambre (13) de tourbillonnement; puis la pression dans la chambre (18) de pression et la chambre (19) de balance est ajustée à la pression du pipeline (1) principale en déplaçant les pistons (17) de l'unité (16) d'amortissement au moyen des ressorts dans la position initiale, permettant ainsi la libre circulation du fluide transporté à travers le stabilisateur (4), **caractérisé en ce qu'**un emplacement de montage du stabilisateur (4) est déterminé sur une distance maximale de 10 mètres d'une source (5)potentielle d'impulsions de pression, et lorsque au moins deux stabilisateurs (4) sont montés à titre préventif, les faisant monter l'un après l'autre à une distance de 100 à 1000 mètres.

2. Le procédé d'auto-amortissement d'impulsions de surpression selon la revendication 1, **caractérisé en ce que** ledit amortissement de pression d'impulsions est effectué par l'unité (16) d'amortissement, prévue sous la forme d'une cage circulaire ayant des trous axiaux recevant lesdits pistons (17) sollicités par ressort des deux côtés, dans lequel la cage circulaire est divisée par un plan transversal à son axe en deux parties d'épaisseur inégale, dans lequel celle la plus petite (21) est dirigée à la chambre (11) d'écoulement direct et est fixée de manière permanente au diviseur (9), et celle la plus grande (22) est couplée à une languette sur le dernier.

3. Le procédé d'auto-amortissement d'impulsions de surpression selon la revendication 1, **caractérisé en ce que** ledit amortissement de pression d'impulsions peut être effectué par le stabilisateur (4), dans lequel le corps (7) est démontable par rapport à une entretoise (27), reliée de manière permanente à la sortie, à l'entrée et aux brides internes (28), dans lequel ce dernier est relié à une bride intermédiaire (29) par une jauge (30).
